# EUROPÄISCHE PATENTSCHRIFT

(11) **EP 1 387 930 B1**
(45) Veröffentlichungstag und Bekanntmachung des Hinweises auf die Patenterteilung: **21.02.2007**
(21) Anmeldenummer: 02737754.8
(22) Anmeldetag: 27.03.2002
(51) Int. Cl.: F01N 3/20, B01D 53/94, F16K 15/14

(54) **VORRICHTUNG ZUM NACHBEHANDELN VON ABGASEN EINER BRENNKRAFTMASCHINE**
DEVICE FOR THE POST-TREATMENT OF EXHAUST GASES OF AN INTERNAL COMBUSTION ENGINE
DISPOSITIF DE RETRAITEMENT DE GAZ D'ECHAPPEMENT DE MOTEUR A COMBUSTION INTERNE

(30) Priorität: 30.03.2001 DE 10116214
(43) Veröffentlichungstag der Anmeldung: 11.02.2004
(73) Patentinhaber: ROBERT BOSCH GMBH, 70442 Stuttgart (DE)
(72) Erfinder: HAGER, Bernhard, A-5412 Puch (AT); HUBER, Sven, 83395 Freilassing (DE); MUELLER, Gerhard, 83395 Freilassing (DE); OFFENHUBER, Sven, A-5421 Adnet (AT)
(86) Internationale Anmeldenummer: PCT/DE2002/001112
(87) Internationale Veröffentlichungsnummer: WO 2002/079616

(56) Entgegenhaltungen:
- WO-A-96/36797

## Beschreibung

### Stand der Technik

Die vorliegende Erfindung betrifft eine Vorrichtung zum Nachbehandeln von Abgasen einer Brennkraftmaschine unter Verwendung eines in die Abgase einzubringenden Reduktionsmittels, insbesondere Harnstoff bzw. Harnstoff-Wasser-Lösung, mit einer Mischkammer, beziehungsweise eine Mischkammer, nach dem Oberbegriff der unabhängigen Ansprüche.

Als Folge der in den letzten Jahren stets niedriger anzusetzenden Schadstoffgrenzwerte sind zahlreiche Vorrichtungen und Verfahren zur Nachbehandlung von Abgasen in Brennkraftmaschinen entwickelt worden. Beispielsweise mittels Katalysatorsystemen, welche Harnstoff und/oder Ammoniak als Reduktionsmittel zur NOₓ-Konvertierung verwenden, sind effiziente Abgasnachbehandlungssysteme zur Verfügung gestellt.

Um eine Verminderung von NOₓ-Bestandteilen in Abgasen zu erzielen, wurden insbesondere für Dieselmotoren Reduktionskatalysatoren entwickelt, die üblicherweise in sogenannte SCR-Katalysatoren (engl. Selective Catalytic Reduction) mit Harnstoffdosiersystem und Speicherkatalysatoren unterteilt werden. Die sogenannten SCR-Katalysatoren werden mittels einer Harnstoff- und/oder Ammoniakreduktionsmittelzufuhr generiert, während die sogenannten Speicherkatalysatoren mit Kohlenwasserstoffen des mitgeführten Brennkraftmaschinen-Brennstoffs in sogenannten Abgasfettphasen regeneriert werden.

Aus der WO 96/36797 ist ein Harnstoffdosiersystem mit einer Druckluftzufuhreinrichtung zur Zerstäubung des Harnstoffs bekannt, bei dem im Druckluftpfad ein Rückschlagventil vorgesehen ist.

Aus der WO 02/13951 A1 ist ein Harnstoffdosiersystem bekannt, bei dem Luft nach Passieren einer elastischen Hülse in einen Mischraum gelangen kann.

Aufgabe der Erfindung ist die Verbesserung einer gattungsgemäßen Vorrichtung zum Nachbehandeln von Abgasen dahingehend, dass eine Kontamination der Luftzufuhrleitung bzw. eines hiermit kommunizierenden Druckluft-Bordnetzes sicher vermieden werden kann.

Diese Aufgabe wird gelöst durch eine Vorrichtung, insbesondere eine Mischkammer, mit den Merkmalen des Anspruchs 1.

### Vorteile der Erfindung

Durch die erfindungsgemäße Maßnahme, ein Rückschlagventil mit einem federbelasteten Dichtschlauch vorzusehen, kann eine Kontamination der Druckluftleitung bzw. des Druckluft-Bordnetzes äußerst wirksam vermieden werden. Es ist hierdurch beispielsweise möglich, die Luft in der Druckluftleitung mit einem gegenüber herkömmlichen Lösungen relativ geringen Druck zu beaufschlagen. Der federbelastete Dichtschlauch gewährleistet einen Platz sparenden, kompakten und preiswerten Aufbau und erweist sich in der Praxis als robust und zuverlässig. Die Federbelastung erhöht in vorteilhafter Weise die Sicherheit beim Abdichten des Druckluftsystems gegenüber dem korrosiv wirkenden Reduktionsmittel; darüber hinaus gewährleistet sie die Bereitstellung eines definierten Luftvolumenstroms über die gesamte erhöhte Lebensdauer der Vorrichtung beziehungsweise der Mischkammer, da sie dem System zu einer definiert angeordneten Dichtstelle verhilft.

Vorteilhafte Ausgestaltungen der erfindungsgemäßen Vorrichtung bzw. der erfindungsgemäßen Mischkammer sind Gegenstand der Unteransprüche.

Weist das Federmittel eine Abstützhülse auf, so kann in vorteilhafter Weise die Montage einer integrierten Dosierventil-Mischkammer-Anordnung mit integriertem Rückschlagventil für die Druckluftzufuhr erheblich vereinfacht werden. Insbesondere bei dem Aufstecken des Dichtschlauchs auf den Dosierventilkörper kann dadurch eine Verletzung des beispielsweise aus einem Elastomer gefertigten Dichtschlauchs vermieden werden. Ferner kann das dem Elastomerbauteil zugewandte Ende des Dosierventilkörpers einfacher gefertigt werden, da scharfe Kanten oder Ähnliches nicht mehr unter allen Umständen vermieden werden müssen.

Darüber hinaus kann der Dichtschlauch so geformt sein, dass er neben einer Abdichtung des Druckluftsystems und der Verteilung zugeführter Druckluft gleichzeitig eine Abdichtung anderer Stellen, insbesondere der Schnittstelle zwischen Mischraum und integriertem Dosierventil, gewährleistet.

Weitere Vorteile ergeben sich aus den weiteren in den weiteren abhängigen Ansprüchen und in der Beschreibung genannten Merkmalen.

### Zeichnung

Bevorzugte Ausgestaltungen der erfindungsgemäßen Vorrichtung bzw. der erfindungsgemäßen Mischkammer werden nun anhand der beigefügten Zeichnung näher beschrieben. In dieser zeigt
- Figur 1: eine blockschaltbildartige Ansicht einer Vorrichtung zur Nachbehandlung von Abgasen,
- Figur 2: eine Mischkammer,
- Figur 3: ein Rückschlagventil und
- Figur 4: eine Mischkammer mit einem integrierten metallfederbelasteten Rückschlagventil.

### Beschreibung der Ausführungsbeispiele

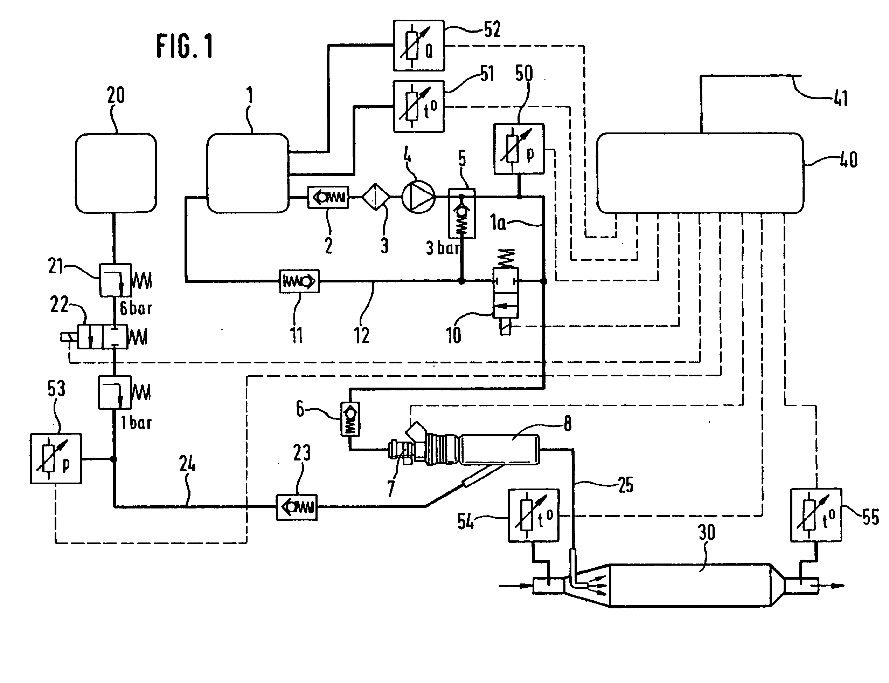

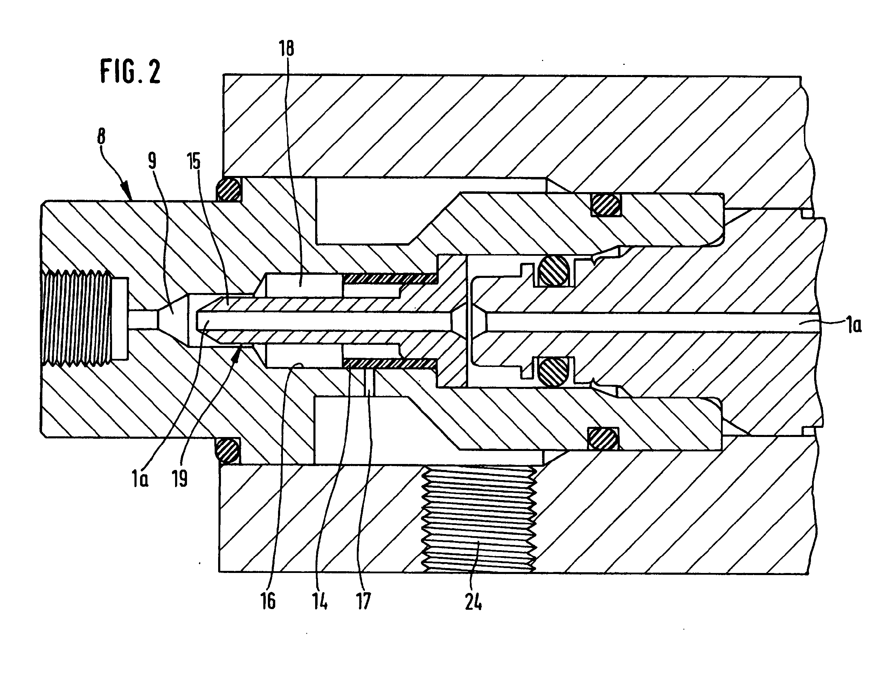

In Figur 1 ist mit 1 ein Harnstofftank bezeichnet, aus welchem eine Harnstoff-Wasser-Lösung über eine Leitung 1a mit einem Rückschlagventil 2 und einem als Filtersieb ausgeführten Filter 3 von einer Förderpumpe 4 angesaugt und über ein weiteres Rückschlagventil 6 zu einem Dosierventil 7 einer Mischkammer 8 gefördert wird. Das Dosierventil 7 dosiert die erforderliche Menge an Harnstoff-Wasser-Lösung in einen Mischraum, welcher in Figur 2 mit 9 bezeichnet ist. Eine eventuell auftretende Überströmmenge der Harnstoff-Wasser-Lösung ist über einen Druckregler 5 und ein weiteres Rückschlagventil 11 durch eine Rücklaufleitung 12 in den Harnstofftank 1 zurückführbar. Eine eventuell notwendige Entlüftung der Leitung 1a ist über einen Entlüftungskreislauf mit einem Entlüftungsventil 10 durchführbar.

Mit 20 ist ferner ein Druckluftbehälter bezeichnet, aus welchem Druckluft über einen Druckbegrenzer 21, ein 2/2-Wegeventil 22 und ein Rückschlagventil 23 in die Mischkammer einbringbar ist. Durch Vorsehen des Rückschlagventils 23, welches beispielsweise als Kugelventil oder Flachsitzventil ausgebildet sein kann, kann ein Rückströmen eines Reduktionsmittel-Luft-Gemisches aus der Mischkammer in die Druckluftleitung 24 hinaus verhindert werden. Hierdurch ist die Gefahr einer Kontamination eines mit der Druckluftleitung 24 kommunizierenden Druckluft-Bordnetzes gegenüber herkömmlichen Systemen stark reduziert.

In der Mischkammer 8 wird unter Beaufschlagung der Harnstoff-Wasser-Lösung mittels der Druckluft ein Aerosol erzeugt, welches über eine Aerosolleitung 25 in einen Katalysator 30 eingebracht wird. Ein Steuergerät 40 erfaßt hierbei Signale, die von einem übergeordneten Motorsteuergerät über eine CAN-Datenleitung 41 empfangen werden, sowie die Signale von Druck-, Temperatur- bzw. Füllstandssensoren 50 bis 55, deren Funktionsweise an sich bekannt ist und hier nicht weiter erläutert wird. Das Steuergerät 40 berechnet aus diesen Informationen eine Harnstoff-Dosiermenge, welche einem den Katalysator 30 durchströmenden Abgas zugegeben werden soll.

Das Steuergerät 40 regelt mit Hilfe der beschriebenen Magnetventile den Druck in der Druckluftleitung 24, und überwacht ferner den Harnstoff-Wasser-Lösungsdruck. Das Steuergerät 40 erkennt Abweichungen und Fehler, speichert diese und bringt sie durch ein (nicht gezeigtes) Diagnosegerät, beispielsweise an einem PC, zur Anzeige.

Unter Bezugnahme auf Fig. 2 wird nun eine Mischkammer, wie sie im Rahmen der zuvor illustrierten Vorrichtung einsetzbar ist, beschrieben. Wesentlich bei dieser Mischkammer 8 ist, daß das Rückschlagventil aus einem Silikonschlauch 14 bzw. aus einem Schlauch aus einem ähnlichen elastischen Werkstoff besteht, der auf einen Ventilkörper 15 aufgesteckt ist und an der Innenwand 16 der Mischkammer 8 dicht anliegt. Strömt aus der Druckluftleitung 24 Druckluft in die Düsenbohrung 17 (es können über den Umfang verteilt mehrere derartiger Düsenbohrungen vorgesehen sein), so wird der Silikonschlauch 14 von der Mischkammerinnenwand 16 abgedrückt und die Luft kann in einen Diffusor 18 einströmen und weiter über einen Ringspalt 19 in den Mischraum 9 gelangen. In dem Mischraum 9 vermischt sich die Luft mit der aus der Harnstoffleitung 1a ausströmenden wässrigen Harnstofflösung.

Entsteht bei instationärem Betrieb oder aufgrund von Turbulenzen eine Gemischrückströmung aus dem Mischraum 9 in den Diffusor 18, so wird der Silikonschlauch 14 dicht an die Innenwand 16 der Mischkammer gedrückt und verhindert das weitere Rückströmen des Gemisches in die Druckluftleitung 24.

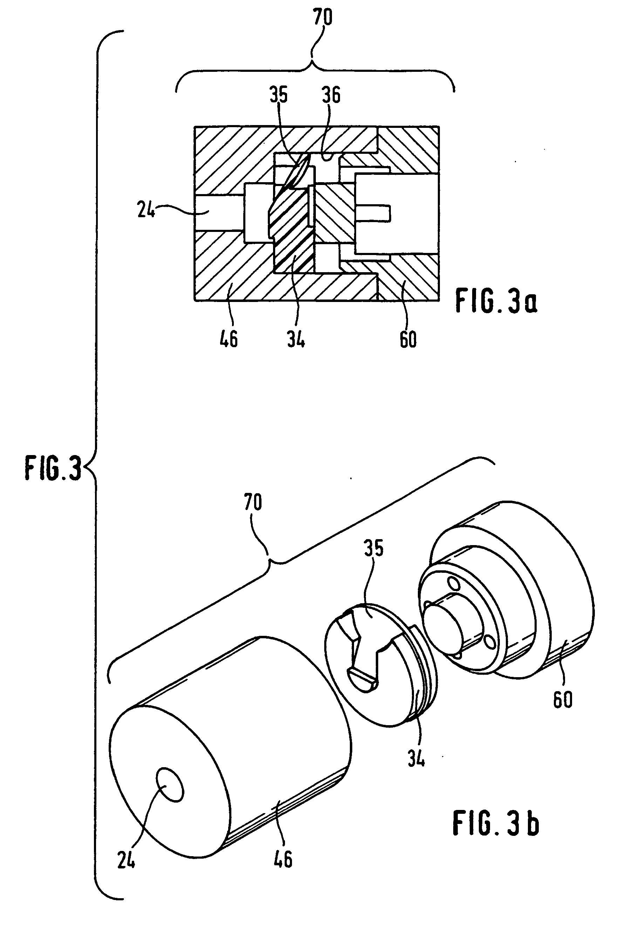

Eine weitere Variante eines bei der Vorrichtung bzw. der Mischkammer nach Figur 1 einsetzbaren Rückschlagventils wird nun unter Bezugnahme auf die Figur 3 beschrieben. Hierbei zeigt Figur 3a) eine geschnittene Ansicht, und Figur 3b) eine perspektivische explodierte Ansicht des Rückschlagventils. Kernstück des in der Figur 3 dargestellten Rückschlagventils ist ein Elastomerventilkörper 34, der mit einer Dichtlippe 35 luftdicht an der Innenwand 36 eines Ventilgehäuses 46 anliegt. Es ist ebenfalls möglich, daß die Dichtlippe 15 unmittelbar an der Innenwandung der Druckluftleitung, wie sie unter Bezugnahme auf Figur 1 beschrieben wurde, anliegt. Bei einströmender Luft aus der Luftleitung 24 öffnet das Ventil, bei rückströmender Luft schließt das Ventil.

Für eine universelle Anwendung ist das Ventil bevorzugt als Ventilpatrone 50 ausgeführt, welche aus dem Ventilkörper 34, dem Ventilgehäuse 46 und einem Ventildeckel 60 besteht.

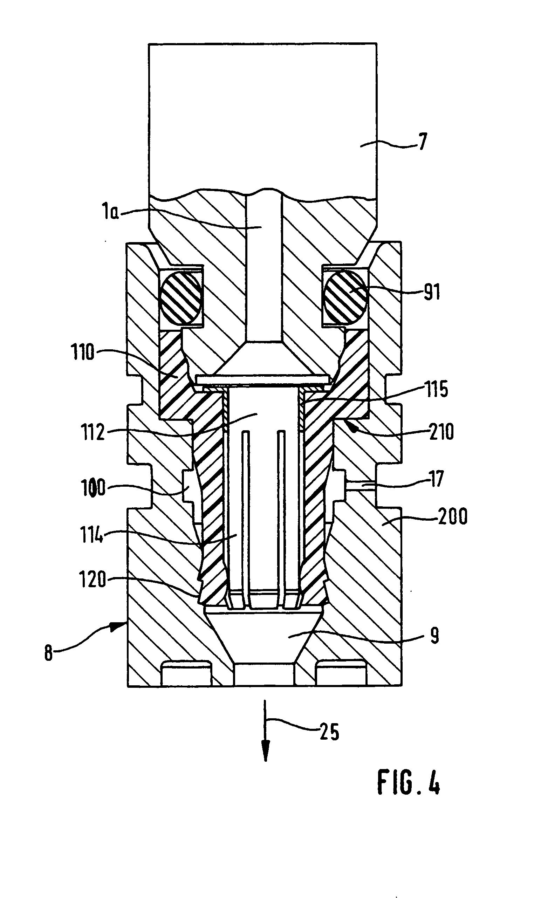

Figur 4 zeigt die Mischkammer 8 einer erfindungsgemäßen Vorrichtung nach Figur 1. Das Dosierventil 7 zur Dosierung der Harnstoff-Wasser-Lösung (HWL) stellt das Ende der Harnstoffleitung 1a dar und ragt in den Grundkörper 200 der Mischkammer 8 hinein, wobei eine O-Ring-Dichtung 91 eine Abdichtung des Zwischenraums zwischen Grundkörper und Dosierventil gewährleistet. Nicht näher dargestellte Befestigungsmittel fixieren hierbei das Dosierventil relativ zur Mischkammer. Die zentrale Bohrung des Grundkörpers 200 weist eine Schulter 210 auf, auf der ein Dichtschlauch 110 aufsitzt, der an seinem dem Dosierventil gegenüberliegendem Ende ein Profil aufweist, das in Dichtkanten 120 der zentralen Bohrung eingreift. Im durchmesserkleinen Bereich des Dichtschlauchs ist ein metallischer Federzylinder 112 eingefügt, der über eine in den Federzylinder integrierte Abstützhülse 115 auf dem Dichtschlauch 110 aufsitzt. Das Dosierventil 7 wiederum kann beim Zusammensetzen der Vorrichtung höchstens bis zu der dem Dichtschlauch abgewandten Fläche der Abstützhülse in den durchmessergrossen Bereich des Dichtschlauchs eingebracht werden. Der Federzylinder 112 weist Federlaschen 114 auf, die das Profil des Dichtschlauchs gegen die Dichtkanten 120 drücken. Zwischen dem Bereich der Dichtkanten und der Schulter 210 ist eine Ringnut 100 vorgesehen, die einen freien Bereich zwischen Dichtschlauch und Grundkörper 200 bildet. In diese Ringnut 100 mündet die bereits in Figur 2 dargestellte Düsenbohrung 17, die ähnlich zur Anordnung nach Figur 2 an die Druckluftleitung 24 angeschlossen werden kann. Am dem Dosierventil abgewandten Ende des Federzylinders 112, 114 schließt sich der Mischraum 9 an, der gemäß Figur 1 an die Aerosolleitung 25 angeschlossen werden kann.

Die Druckluft strömt durch die Düsenbohrung 17 in die Ringnut 100, die die Luft gleichmässig über den Schlauchumfang verteilt. Der Dichtschlauch 110 wird durch den Federzylinder 112, 114 in Form gehalten, indem er einen Anpressdruck bereitstellt und die Dichtwirkung an den Dichtkanten 120 verbessert. Der Anpressdruck an den Dichtkanten kann durch eine entsprechende Auslegung der Federkonstanten des Federzylinders passend gewählt werden. Der Dichtschlauch gewährleistet gleichzeitig eine Abdichtung des Mischraums vom Außenraum, insbesondere von dem Bereich, in dem das Dosierventil in den Grundkörper hineinragt. Der Dichtschlauch 110 wird als Formteil ausgeführt.

Die erfindungsgemäße Vorrichtung ist insbesondere als Mischkammer ausgebildet, nämlich als Mischkammer zum Erzeugen eines Reduktionsmittel-Luft-Gemisches, insbesondere eines Aerosols, mit einem Mischraum, in welchem Reduktionsmittel über eine Reduktionsmittelleitung und Druckluft über eine Druckluftleitung einbringbar sind, wobei zur Verhinderung eines Rückstromes von Reduktionsmittel oder Reduktionsmittel-Luft-Gemisch aus der Mischkammer in die Druckluftleitung ein Rückschlagventil vorgesehen ist und das Rückschlagventil einen elastischen Dichtschlauch aufweist, wobei der Schlauch bei Druckbeaufschlagung der Druckluftleitung ein Durchtreten von Druckluft von der Druckluftleitung in einen Mischraum der Mischkammer gestattet und bei entgegengesetzter Druckbeaufschlagung ein Durchtreten von Reduktionsmittel oder Reduktionsmittel-Luft-Gemisch von dem Druckraum in die Druckluftleitung verhindert, wobei der Dichtschlauch (110) federbelastet (112, 114) ist.

## Patentansprüche

1. Vorrichtung zum Nachbehandeln von Abgasen einer Brennkraftmaschine unter Verwendung eines in die Abgase einzubringenden Reduktionsmittels, insbesondere eines Harnstoffs bzw. einer Harnstoff-Wasser-Lösung, mit einer Mischkammer, in welche das Reduktionsmittel über eine Reduktionsmittelleitung und Druckluft über eine Druckluftleitung zur Erzeugung eines Reduktionsmittel-Luft-Gemisches einbringbar sind, wobei zur Verhinderung eines Rückstromes von Reduktionsmittel oder Reduktionsmittel-Luft-Gemisch aus der Mischkammer in die Druckluftleitung ein Rückschlagventil vorgesehen ist und das Rückschlagventil einen elastischen Dichtschlauch aufweist, wobei der Dichtschlauch bei Druckbeaufschlagung der Druckluftleitung ein Durchtreten von Druckluft von der Druckluftleitung in einen Mischraum der Mischkammer gestattet und bei entgegengesetzter Druckbeaufschlagung ein Durchtreten von Reduktionsmittel oder Reduktionsmittel-Luft-Gemisch von dem Druckraum in die Druckluftleitung verhindert, wobei der Dichtschlauch (110) federbelastet (112, 114) ist.

2. Vorrichtung nach Anspruch 1, **dadurch gekennzeichnet, dass** der Körper (7) eines Ventils zur Dosierung des Reduktionsmittels in den Dichtschlauch (110) eingesteckt ist.

3. Vorrichtung nach einem der vorhergehenden Ansprüche, **dadurch gekennzeichnet, dass** der Dichtschlauch (110) in einer Bohrung eines Grundkörpers (200) der Mischkammer (8) eingebracht ist.

4. Vorrichtung nach Anspruch 2 oder 3, **dadurch gekennzeichnet, dass** die Federbelastung am dem Ventilkörper (7) abgewandten Ende des Dichtschlauchs (110) erfolgt.

5. Vorrichtung nach Anspruch 3 und 4, **dadurch gekennzeichnet, dass** zwischen dem Ventilkörper (7) und dem abgewandten Ende in der Bohrung eine Ringnut (100) angeordnet ist, so dass sich über eine in die Ringnut (100) mündende, mit Druckluft beaufschlagbare Düsenbohrung (17) im Grundkörper (200) Druckluft über den Umfang des Dichtschlauchs (110) verteilen kann.

6. Vorrichtung nach einem der Ansprüche 2 bis 5, **dadurch gekennzeichnet, dass** die Federbelastung mittels eines zwischen dem Ventilkörper (7) und dem Mischraum (9) angeordneten Federzylinders (112, 114, 115) erfolgt, wobei die Dosierung des Reduktionsmittels durch das Innere des Federzylinders hindurch in den Mischraum hinein erfolgen kann.

7. Vorrichtung nach Anspruch 6, **dadurch gekennzeichnet, dass** der Federzylinder (112, 114, 115) über eine in den Federzylinder integrierte Abstützhülse (115) auf dem Dichtschlauch (110) aufsitzt.

8. Vorrichtung nach Anspruch 7, **dadurch gekennzeichnet, dass** die dem Dichtschlauch (110) abgewandte Seite der Abstützhülse (115) beim Aufstecken des Dichtschlauchs auf den Ventilkörper eine Begrenzung für den Ventilkörper bildet.

## Claims

1. Device for the aftertreatment of exhaust gases of an internal combustion engine using a reduction agent, in particular urea or a urea/water solution, which is to be introduced into the exhaust gases, having a mixing chamber into which the reduction agent can be introduced via a reduction agent line and compressed air can be introduced via a compressed air line in order to generate a reduction-agent/air mixture, a non-return valve being provided in order to prevent a return flow of reduction agent or reduction-agent/air mixture from the mixing chamber into the compressed air line, and the non-return valve having an elastic sealing hose, the sealing hose allowing compressed air to pass from the compressed air line into a mixing space of the mixing chamber when the compressed air line is pressurized, and preventing reduction agent or reduction-agent/air mixture from passing from the pressure space into the compressed air line when pressure acts in the opposite direction, the sealing hose (110) being spring-loaded (112, 114).

2. Device according to Claim 1, **characterized in that** the body (7) of a valve for metering the reduction agent is inserted into the sealing hose (110).

3. Device according to one of the preceding claims, **characterized in that** the sealing hose (110) is placed in a bore of a base body (200) of the mixing chamber (8).

4. Device according to Claim 2 or 3, **characterized in that** the spring loading acts on that end of the sealing hose (110) which is remote from the valve body (7).

5. Device according to Claims 3 and 4, **characterized in that**, between the valve body (7) and the remote end, an annular groove (100) is arranged in the bore so that compressed air can be distributed around the periphery of the sealing hose (110) via a nozzle bore (17), which opens out into the annular groove (100) and can be acted on with compressed air, in the base body (200).

6. Device according to one of Claims 2 to 5, **characterized in that** the spring loading is exerted by means of a spring cylinder (112, 114, 115) arranged between the valve body (7) and the mixing space (9), it being possible for the reduction agent to be metered into the mixing space through the interior of the spring cylinder.

7. Device according to Claim 6, **characterized in that** the spring cylinder (112, 114, 115) is seated on the sealing hose (110) via a support sleeve (115) which is integrated into the spring cylinder.

8. Device according to Claim 7, **characterized in that**, when the sealing hose is plugged onto the valve body, that side of the support sleeve (115) which faces away from the sealing hose (110) forms a delimitation for the valve body.

## Revendications

1. °) Dispositif de retraitement des gaz d'échappement d'un moteur à combustion interne par utilisation d'un agent réducteur à introduire dans les gaz d'échappement, notamment de l'urée ou une solution aqueuse d'urée, dans lequel :
- une chambre de mélange peut recevoir l'agent réducteur par une conduite d'agent réducteur et de l'air comprimé par une conduite d'air comprimé, de manière à obtenir un mélange réducteur-air,
- pour éviter un reflux du réducteur ou du mélange réducteur-air de la chambre de mélange dans la conduite d'air comprimé, un clapet anti-retour présente un tuyau d'étanchéité élastique,
- le tuyau d'étanchéité élastique, quand la conduite d'air comprimé est soumise à l'action de la pression, autorise l'air comprimé à passer de la conduite d'air comprimé dans un espace de mélange de la chambre de mélange, tandis qu'il empêche un passage du réducteur ou du mélange réducteur-air de la chambre de pression dans la conduite d'air comprimé quand l'action de la pression est inversée, le tuyau d'étanchéité (110) étant soumis à l'action de ressorts (112, 114).

2. °) Dispositif selon la revendication 1,
**caractérisé en ce que**
le corps (7) d'une soupape servant à doser le réducteur est emmanché dans le tuyau d'étanchéité (110).

3. °) Dispositif selon la revendication 1 ou 2,
**caractérisé en ce que**
le tuyau d'étanchéité (110) est monté dans un alésage du corps de base (200) de la chambre de mélange (8).

4. °) Dispositif selon la revendication 2 ou 3,
**caractérisé en ce que**
l'action des ressorts s'exerce sur l'extrémité du tuyau d'étanchéité (110) éloignée du corps de soupape (7).

5. °) Dispositif selon la revendication 3 ou 4,
**caractérisé en ce qu'**
entre le corps de soupape (7) et l'extrémité éloignée de l'alésage, se trouve une rainure annulaire (100), de sorte que de l'air comprimé arrivant par l'intermédiaire d'un alésage de busc (17) débouchant dans la rainure annulaire (100) dans le corps de base (200), peut se répartir à la périphérie du tuyau d'étanchéité (110).

6. °) Dispositif selon une des revendications 2 à 5,
**caractérisé en ce que**
la charge élastique est produite par l'intermédiaire d'un cylindre élastique (112, 114, 115) disposé entre le corps de soupape (7) et la chambre de mélange (9), le dosage du réducteur pouvant s'effectuer dans la chambre de mélange à travers l'intérieur du cylindre élastique.

7. °) Dispositif selon la revendication 6,
**caractérisé en ce que**
le cylindre élastique (112, 114, 115) est appliqué sur le tuyau d'étanchéité (110) par l'intermédiaire d'une douille d'appui (115) intégrée au cylindre élastique.

8. °) Dispositif selon la revendication 7,
**caractérisé en ce que**
le côté de la douille d'appui (115) éloigné du tuyau d'étanchéité (110), forme quand on emmanche le tuyau sur le corps de soupape, une limite pour le corps de soupape.
